# EUROPÄISCHE PATENTANMELDUNG

(11) **EP 1 249 744 A1**
(43) Veröffentlichungstag der Anmeldung: **16.10.2002**
(21) Anmeldenummer: 01120254.6
(22) Anmeldetag: 23.08.2001
(51) Int. Cl.: G05B 19/042, G05B 19/05

(54) **Verfahren zum Herstellen konsistenter Speicherinhalte in redundanten Systemen**

(71) Anmelder: SIEMENS AKTIENGESELLSCHAFT, 80333 München (DE)
(72) Erfinder: Peleska, Pavel, 82166 Gräfelfing (DE)

(57) **Zusammenfassung**

In einem fehlertoleranten System, das aus zwei identischen Steuerungseinrichtungen (SE₀, SE₁) aufgebaut ist, besteht die Notwendigkeit konsistente, d.h. identische, Speicherinhalte in beiden Einrichtungen herzustellen, um im Falle eines Hardwaredefektes in einer der beiden Steuerungseinrichtungen (SE₀, SE₁) einen unterbrechungsfreien Betrieb sicherzustellen. Dazu muß der Speicherinhalt von der aktiven Steuerungseinrichtung an die inaktive Steuerungseinrichtung übertragen werden. Die aktive Steuerungseinrichtung bleibt dabei in Betrieb, und die Inhalte des Speichers (MEM₀) der aktiven Steuerungseinrichtung (SE₀) können fortlaufend verändert werden. Erfindungsgemäß erfolgt die Übertragung der Speicherinhalte durch eine Kopiereinrichtung (K₀), wobei die Kopiereinrichtung (K₀) die zu übertragenden und sich ggf. ändernden Speicherbereiche des Speichers (MEM₀) der aktiven Steuerungseinrichtung (SE₀) mittels eines Speicherüberwachungsmoduls (S₀) und eines Markierspeicher (DPTR₀) verwaltet.

## Beschreibung

In einem fehlertoleranten System, das aus zwei identischen Steuerungseinrichtungen aufgebaut ist, besteht die Notwendigkeit konsistente, d.h. identische, Speicherinhalte in beiden Einrichtungen herzustellen, um im Falle eines Hardwaredefektes in einer der beiden Steuerungseinrichtungen einen unterbrechungsfreien Betrieb sicherzustellen. Dazu muß der Speicherinhalt von der aktiven Steuerungseinrichtung an die inaktive Steuerungseinrichtung übertragen werden. Die aktive Steuerungseinrichtung bleibt dabei in Betrieb, und die Inhalte des Speichers der aktiven Steuerungseinrichtung können fortlaufend verändert werden.

Bisher wird zur Lösung dieses Problems ein hardwarebasiertes oder ein softwarebasiertes Verfahren eingesetzt.

Bei dem hardwarebasierten Verfahren werden alle Daten, die in den Speicher der aktiven Steuerungseinrichtung geschrieben werden, über eine Schnittstelle von der aktiven Steuerungseinrichtung zu der inaktiven Steuerungseinrichtung übertragen. Hierfür ist es erforderlich, die Daten extern am Speicherinterface der aktiven Steuerungseinrichtung oder intern in der North-Bridge der aktiven Steuerungseinrichtung abzugreifen und an die Schnittstelle zur inaktiven Steuerungseinrichtung weiterzuleiten.

Dieses Abgreifen und Weiterleiten muß entweder so schnell geschehen können, daß keine Daten verloren gehen, d.h. die Bandbreite der Schnittstelle zur inaktiven Steuerungseinrichtung muß mindestens so groß sein wie die der Speicherschnittstelle, oder es muß eine Möglichkeit geben, die Geschwindigkeit, mit der neue Daten in den Speicher der aktiven Steuerungseinrichtung geschrieben werden, mithin die Geschwindigkeit der CPU, so zu bremsen, daß es zu keinem Datenverlust kommt.

Bei den bekannten hardwarebasierten Verfahren treten folgende Probleme auf:
- Durch das Bremsen der Schreibdatenrate der CPU sinkt deren Verarbeitungsgeschwindigkeit.
- Um die CPU abzubremsen ist eine hardwaremäßige Ansteuerung der CPU und damit der Zugang zum CPU-Bus erforderlich. Der Zugang zum CPU-Bus kann unerwünscht oder sogar unmöglich sein, wenn beispielsweise die Funktionalität der North-Bridge in der CPU integriert ist - in Zukunft häufiger zu finden.
- Falls das Abgreifen der Schreibdaten in der North-Bridge selbst erfolgt, kann i.d.R. keine herkömmliche North-Bridge verwendet werden. Der Entwicklungsaufwand für eine dann erforderliche spezielle North-Bridge ist erheblich.

Bei den softwarebasierten Verfahren werden Speicherbereichstabellen der CPU verwendet, und dort insbesondere das Dirty-Bit, welches anzeigt, ob auf einen Speicherbereich schreibend zugegriffen wurde. Ein Task, der im Hintergrund läuft, überprüft periodisch die Einträge der Speicherbereichstabellen und veranlaßt das Kopieren von Speicherbereichen, auf die schreibend zugegriffen wurde, d.h. deren zugehöriges Dirty-Bit gesetzt ist.

Bei den bekannten softwarebasierten Verfahren treten folgende Probleme auf:
- Der Hintergrund-Task, der die Einträge der Speicherbereichstabellen auswertet, verbraucht CPU-Leistung.
- Bei diesem Verfahren muß sichergestellt sein, daß die 'Dirty-Bits' zu diesem Zweck genutzt werden können. Moderne Betriebssysteme verwenden selbst die Speicherverwaltungseinheit der CPU, die für die Verwaltung des Speichers unter Zuhilfenahme der Speicherbereichstabellen zuständig ist, und manipulieren dabei häufig die Speicherbereichstabellen. Das softwarebasierte Verfahren funktioniert also nur dann, wenn das Betriebssystem die Speicherverwaltungseinheit der CPU nicht verwendet, oder so ausgelegt ist, daß das Verfahren direkt vom Betriebssystem unterstützt wird.

Die der vorliegenden Erfindung zugrundeliegende Aufgabe besteht darin, die bekannten Verfahren zum Herstellen konsistenter Speicherinhalte in redundanten Systemen zu verbessern.

Diese Aufgabe wird durch die Merkmale des Patentanspruchs 1 gelöst.

Ein wesentlicher Vorteil des erfindungsgemäßen Verfahrens besteht darin, daß das Herstellen der konsistenten Speicherinhalte mit Hilfe einfacher Einrichtungen - Speicherüberwachungsmodul, Kopiereinrichtung, Markierspeicher - erfolgt und durch die Kopiereinrichtung gesteuert wird. Es ist daher keine speziell angefertigte North-Bridge für das Abgreifen der Speicherinhalte erforderlich. Es ist außerdem nicht erforderlich, die Schreibdatenrate und damit die Verarbeitungsgeschwindigkeit der CPU zu bremsen, da die zu übertragendenden Daten nicht direkt von der CPU abgegriffen, sondern aus dem Speicher gelesen werden. Die Verbindung, die zum Übertragen der zu Speicherinhalte an die inaktive Steuerungseinrichtung eingesetzt wird, kann eine geringere Bandbreite als die Speicherschnittstelle zwischen CPU und Speicher aufweisen. Das Verfahren arbeitet unabhängig von den Dirty-Bits in den Speicherbereichstabellen der CPU, indem in dem Markierspeicher neue Dirty-Bits gebildet werden. Daraus folgt vorteilhaft, daß der Einsatz von Betriebssystemen keinen Einschränkungen hinsichtlich der Speicherverwaltung unterliegt bzw. eine Anpassung der Betriebssysteme nicht erforderlich ist. Darüberhinaus sorgt die Steuerung des Verfahrens durch die Kopiereinrichtung dafür, daß für das Herstellen der konsistenten Speicherinhalte keine CPU-Leistung verbraucht wird.

Vorteilhaft werden im Markierspeicher, in welchem die Dirty-Bits abgelegt sind, die einen schreibenden Zugriff auf den jeweiligen Speicherbereich anzeigen, auch noch Informationen über Speicherbereiche hinterlegt, die beim Übertragen an das inaktive System ausgelassen werden sollen - Anspruch 3. Von Vorteil ist dabei, daß Speicherbereiche, die häufig modifiziert werden, jedoch keine notwendigen Informationen enthalten, die Konvergenz des Verfahrens nicht behindern.

Weitere vorteilhafte Ausgestaltungen der Erfindung sind den Unteransprüchen zu entnehmen.

Im folgenden wird das erfindungsgemäße Verfahren anhand einer Zeichnung näher erläutert.

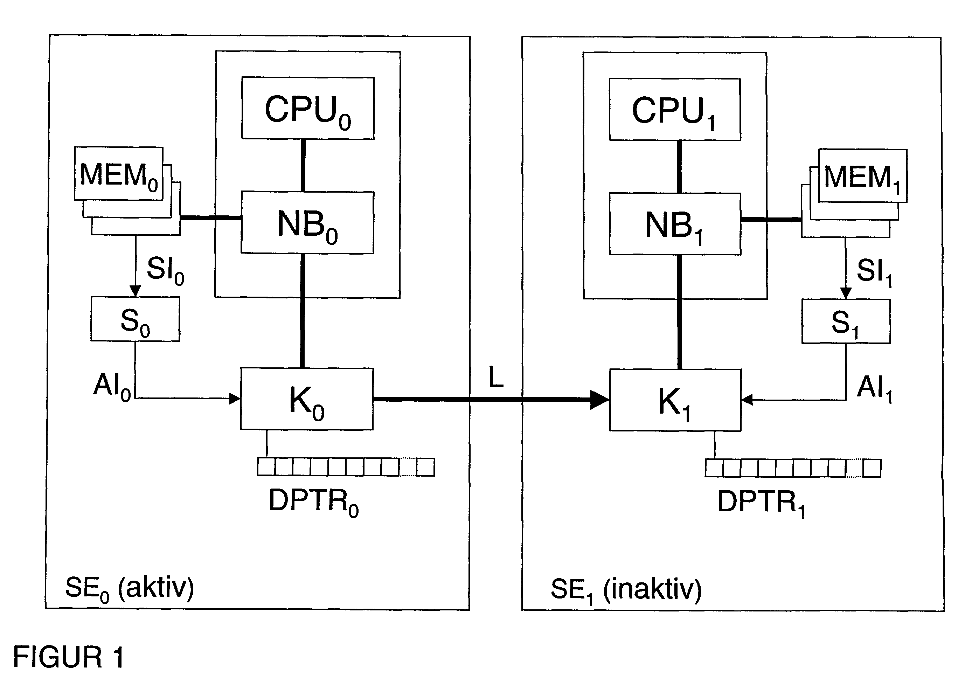

Die Figur zeigt eine aktive Steuerungseinheit SE₀ und eine inaktive Steuerungseinheit SE₁ eines fehlertoleranten Systems. Beide Steuerungseinheiten SE₀, SE₁ sind identisch aufgebaut und bestehen aus je einer Verarbeitungseinheit CPU₀, CPU₁, je einer Schnittstelleneinheit bzw. North-Bridge NB₀, NB₁ und je einem Speicher MEM₀, MEM₁. Die Funktionalität der Verarbeitungseinheiten CPU₀, CPU₁ und der North-Bridges NB₀, NB₁ kann, wie dargestellt, in je zwei separaten Einrichtungen ausgeführt sein oder in je einer einzigen Einrichtung zusammengefaßt werden - nicht dargestellt.

Weiterhin zeigt die Figur für die beiden Steuerungseinrichtungen SE₀, SE₁ je eine erfindungsgemäße Kopiereinrichtung K₀, K₁ mit je einem verbundenen Markierspeicher bzw. Dirty Page Tag RAM DPTR₀, DPTR₁ und je einem Speicherüberwachungsmodul bzw. Snooper S₀, S₁.

In einem ersten Ausführungsbeispiel des erfindungsgemäßen Verfahrens wird dieses benutzt, um die Inhalte des Speichers MEM₀ der aktiven Steuerungseinrichtung SE₀ in den Speicher MEM₁ der inaktiven Steuerungseinrichtung SE₁ erstmalig zu synchronisieren, beispielsweise nach einem Neustart der inaktiven Steuerungseinrichtung SE₁ nach vorangegangenem Ausfall. Nach Herstellen identischer Speicherinhalte wird die inaktive Steuerungseinrichtung SE₁ ebenfalls aktiviert. Beide Steuerungseinrichtungen arbeiten dann synchron, wobei ein Verfahren, das nicht Gegenstand der vorliegenden Erfindungsmeldung ist, die Synchronität der Speicherinhalte beider Steuerungseinrichtungen überwacht.

Der Snooper S₀ der aktiven Steuerungseinrichtung SE₀ beobachtet die Zugriffe der North-Bridge NB₀ der aktiven Steuerungseinrichtung SE₀ auf den Speicher MEM₀ der aktiven Steuerungseinrichtung SE₀. Hierfür ist der Snooper S₀ der aktiven Steuerungseinrichtung SE₀ an die Steuerleitungen des Speicherinterfaces SI₀ der aktiven Steuerungseinrichtung SE₀ angeschlossen, die Aufschluß darüber geben, ob beispielsweise ein Schreibzyklus, ein Lesezyklus oder ein Auffrischzyklus stattfindet. Bedeutsam für den Snooper S₀ der aktiven Steuerungseinrichtung SE₀ sind nur Schreibzyklen. Der Snooper S₀ der aktiven Steuerungseinrichtung SE₀ ist außerdem an die Adreßleitungen und Steuerleitungen des Speicherinterfaces SI₀ der aktiven Steuerungseinrichtung SE₀ angeschlossen, so daß durch den Snooper S₀ der aktiven Steuerungseinrichtung SE₀ festgestellt werden kann, auf welchen Speicherbereich ein Schreibzugriff stattfindet.

Diese Information, d.h. die Speicheradresse, auf die schreibend zugegriffen wird, überträgt der Snooper S₀ der aktiven Steuerungseinrichtung SE₀ als Adreßinformation AI₀ über eine Schnittstelle an eine Kopiereinrichtung K₀ der aktiven Steuerungseinrichtung SE₀, die diese Information auswertet. Bei dieser Kopiereinrichtung K₀ der aktiven Steuerungseinrichtung SE₀ handelt es sich vorzugsweise um ein Field Programmable Gate Array FPGA oder um einen Application Specific Integrated Circuit ASIC. Es ist jedoch auch möglich, die Funktion der Kopiereinrichtung K₀ der aktiven Steuerungseinrichtung SE₀ programmgesteuert mittels eines Mikrocontrollers zu realisieren.

Die Kopiereinrichtung K₀ der aktiven Steuerungseinrichtung SE₀ hat die Aufgabe, die von ihr verwalteten Speicherbereiche des Speichers MEM₀ der aktiven Steuerungseinrichtung SE₀ auf Modifikationen hin zu überwachen und die jeweils modifizierten Inhalte zu lesen und über einen Link L an die Kopiereinrichtung K₁ der inaktiven Steuerungseinrichtung SE₁ zu senden. Die Kopiereinrichtungen K₀, K₁ sind in einer Ausgestaltung vorteilhaft mittels einer Standardschnittstelle - PCI Bus oder AGP Bus - mit den North-Bridges NB₀, NB₁ verbunden.

Die Kopiereinrichtung K₀ der aktiven Steuerungseinrichtung SE₀ ist an ein Dirty Page Tag RAM DPTR₀ der aktiven Steuerungseinrichtung SE₀ angeschlossen. Im Dirty Page Tag RAM DPTR₀ der aktiven Steuerungseinrichtung SE₀ existiert zu jedem Speicherbereich des Speichers MEM₀ der aktiven Steuerungseinrichtung SE₀ ein zugehöriges Bit. Das einem Speicherbereich zugeordnete Bit im Dirty Page Tag RAM DPTR₀ der aktiven Steuerungseinrichtung SE₀ wird durch die Kopiereinrichtung K₀ der aktiven Steuerungseinrichtung SE₀ gesetzt, falls auf den entsprechenden Speicherbereich schreibend zugegriffen wurde. Dadurch wird der entsprechende Speicherbereich als modifiziert - "dirty" - gekennzeichnet.

Die Anzahl von Speicherbereichen, in die der Speicher MEM₀ der aktiven Steuerungseinrichtung SE₀ aufgeteilt ist, und die Größe des jeweiligen Speicherbereichs, der von jeweils einem Bit des Dirty Page Tag RAM DPTR₀ der aktiven Steuerungseinrichtung SE₀ verwaltet wird, spielt dabei keine für das erfindungsgemäße Verfahren wesentliche Rolle. Die Speicherbereiche können eine gleiche Größe oder verschiedene Größen aufweisen.

Ein im Dirty Page Tag RAM DPTR₀ der aktiven Steuerungseinrichtung SE₀ einmal gesetztes Bit wird durch den Snooper S₀ der aktiven Steuerungseinrichtung SE₀ nicht zwischengespeichert. D.h. jeder Schreibzugriff auf eine Adresse bzw. einen Adreßbereich wird vom Snooper S₀ der aktiven Steuerungseinrichtung SE₀ registriert und an die Kopiereinrichtung K₀ der aktiven Steuerungseinrichtung SE₀ signalisiert, unabhängig davon, ob der entsprechende Speicherbereich durch das entsprechende gesetzte Bit im Dirty Page Tag RAM DPTR₀ der aktiven Steuerungseinrichtung SE₀ bereits als modifiziert markiert wurde.

Wird der Vorgang zur erstmaligen Synchronisierung der Speicherinhalte aktiven Steuerungseinrichtung SE₀ und der inaktiven Steuerungseinrichtung SE₁ angestoßen, beispielsweise nach einem Neustart der inaktiven Steuerungseinrichtung SE₁ nach vorangegangenem Ausfall, werden zunächst alle für die Übertragung an die inaktive Steuerungseinrichtung SE₁ vorgesehenen Speicherbereiche durch die Kopiereinrichtungen K₀, K₁ von der aktiven Steuerungseinrichtung SE₀ an die inaktive Steuerungseinrichtung SE₁ übertragen. Dies kann beispielsweise so erfolgen, daß die entsprechenden Bits im Dirty Page Tag RAM DPTR₀ der aktiven Steuerungseinrichtung SE₀ für alle für die Übertragung vorgesehenen Speicherbereiche gesetzt werden. Dann erfolgt die Übertragung der Speicherinhalte mithilfe des erfindungsgemäßen Verfahrens wie im folgenden beschrieben:

Die Kopiereinrichtung K₀ der aktiven Steuerungseinrichtung SE₀ überprüft anhand des Dirty Page Tag RAM DPTR₀ der aktiven Steuerungseinrichtung SE₀, z.B. beginnend bei dem ersten Bit des Dirty Page Tag RAM DPTR₀ der aktiven Steuerungseinrichtung SE₀, ob der korrespondierende Speicherbereich modifiziert wurde. Ist dies der Fall, wird das entsprechende Bit im Dirty Page Tag RAM DPTR₀ der aktiven Steuerungseinrichtung SE₀ zurückgesetzt, und die Kopiereinrichtung K₀ der aktiven Steuerungseinrichtung SE₀ liest den durch dieses Bit als modifiziert gekennzeichneten Speicherbereich des Speichers MEM₀ der aktiven Steuerungseinrichtung SE₀ und transferiert die Speicherinhalte über den Link L zur Kopiereinrichtung K₁ der inaktiven Steuerungseinrichtung SE₁.

Die Kopiereinrichtung K₁ der inaktiven Steuerungseinrichtung SE₁ transferiert die empfangenen Daten in den Speicher MEM₁ der inaktiven Steuerungseinrichtung SE₁. Dabei werden die Daten durch die Kopiereinrichtung K₁ der inaktiven Steuerungseinrichtung SE₁ an genau der Adresse im Speicher MEM₁ der inaktiven Steuerungseinrichtung SE₁ abgelegt, an der sie auch im Speicher MEM₀ der aktiven Steuerungseinrichtung SE₀ hinterlegt sind.

Das Kopieren geschieht nebenläufig zur Aktivität der Verarbeitungseinheit CPU₀ im Hintergrund, so daß Speicherbereiche erneut modifiziert werden können, bis die Kopiereinrichtung K₀ der aktiven Steuerungseinrichtung SE₀ alle durch die entsprechenden Bits des Dirty Page Tag RAM DPTR₀ der aktiven Steuerungseinrichtung SE₀ gekennzeichneten Speicherbereiche abgearbeitet hat.

Falls während des laufenden Vorgangs zur erstmaligen Synchronisierung der Speicherinhalte auf bereits übertragene Speicherbereiche erneut schreibend zugegriffen wird, werden die zugehörigen Bits im Dirty Page Tag RAM DPTR₀ der aktiven Steuerungseinrichtung SE₀ erneut gesetzt, wodurch diese Speicherbereiche erneut als modifiziert gekennzeichnet wird. Ist davon auch der aktuell kopierte Speicherbereich betroffen, kann der laufende Kopiervorgang dabei fortgesetzt oder abgebrochen werden.

Nachdem der Kopiervorgang für einen Speicherbereich erfolgreich abgeschlossen oder wegen zwischenzeitlicher Modifikation abgebrochen wurde, wird durch die Kopiereinrichtung K₀ der aktiven Steuerungseinrichtung SE₀ das nächste Bit im Dirty Page Tag RAM DPTR₀ der aktiven Steuerungseinrichtung SE₀ überprüft. Ist dieses gesetzt, wird der korrespondierende Speicherbereich ebenfalls aus dem Speicher MEM₀ der aktiven Steuerungseinrichtung SE₀ in den Speicher MEM₁ der inaktiven Steuerungseinrichtung SE₁ kopiert, und das betreffende Bit im Dirty Page Tag RAM DPTR₀ der aktiven Steuerungseinrichtung SE₀ wird zurückgesetzt.

Diese Prüfung des Dirty Page Tag RAM DPTR₀ der aktiven Steuerungseinrichtung SE₀ wird für jedes einzelne Bit durchgeführt. Nach Erreichen des letzten Bits im Dirty Page Tag RAM DPTR₀ der aktiven Steuerungseinrichtung SE₀ wird der Vorgang durch die Kopiereinrichtung K₀ der aktiven Steuerungseinrichtung SE₀ beim ersten Bit erneut gestartet.

In der Kopiereinrichtung K₀ der aktiven Steuerungseinrichtung SE₀ ist ein Zähler für die Anzahl der noch nicht kopierten bzw. modifizierten Speicherbereiche vorhanden. Beim Erreichen oder Unterschreiten eines vorgegebenen Zählerstandes wird die Verarbeitungseinheit CPU₀ kurzzeitig davon abgehalten, z.B. durch einen von der Kopiereinrichtung K₀ ausgelösten Interrupt mit einer entsprechenden Interrupt-Behandlungsroutine, weitere Schreibtransaktionen im Speicher MEM₀ der aktiven Steuerungseinrichtung SE₀ auszuführen. In dieser Zeit werden die verbleibenden modifizierten Speicherbereiche der aktiven Steuerungseinrichtung SE₀ durch die Kopiereinrichtung K₀ zu der inaktiven Steuerungseinrichtung SE₁ kopiert.

Nunmehr sind alle durch entsprechende Bits im Dirty Page Tag RAM DPTR₀ der aktiven Steuerungseinrichtung SE₀ gekennzeichneten Speicherbereiche von der aktiven Steuerungseinrichtung SE₀ zu der inaktiven Steuerungseinrichtung SE₁ übertragen. Damit wird das Verfahren gemäß des ersten Ausführungsbeispiels der vorliegenden Erfindung beendet, die Steuerungseinrichtung SE₁ kann aktiviert werden und beide Steuerungseinrichtungen SE₀ und SE₁ können synchron weiterarbeiten.

Die Konvergenz des Verfahrens, d.h. die Geschwindigkeit, mit der sich die Anzahl der noch nicht kopierten Speicherbereiche verringert, hängt allerdings stark von der auf der Verarbeitungseinheit CPU₀ der aktiven Steuerungseinrichtung SE₀ ausgeführten Applikationssoftware ab, insbesondere von der Lokalität und Häufigkeit der schreibenden Speicherzugriffe. Im Allgemeinen sind Schreibzugriffe einer Applikationssoftware lokal eingeschränkt; allerdings kann eine Applikation so geartet sein, daß sie über längere Zeiträume bzw. ohne Unterbrechung schneller Speicherbereiche modifiziert, als diese durch die Kopiereinrichtung K₀ der aktiven Steuerungseinrichtung SE₀ kopiert werden können. In diesem Fall muß die Applikationssoftware gebremst werden, um die Konvergenz zu erzwingen. Dies kann in einer vorteilhaften Weiterbildung des erfindungsgemäßen Verfahrens beispielsweise ebenfalls durch einen von der Kopiereinrichtung K₀ der aktiven Steuerungseinrichtung SE₀ ausgelösten Interrupt mit einer entsprechenden Interrupt-Behandlungsroutine erfolgen, durch welche die Verarbeitungseinheit CPU₀ der aktiven Steuerungseinrichtung SE₀ zunehmend mehr verzögert wird, ohne jedoch in die eigentliche Applikationssoftware einzugreifen.

In einer weiteren vorteilhaften Weiterbildung des erfindungsgemäßen Verfahrens kann das Dirty Page Tag RAM DPTR₀ zu jedem Speicherbereich ein weiteres Bit enthalten, das gesetzt wird, um der Kopiereinrichtung K₀ anzuzeigen, ob dieser Speicherbereich synchronisiert werden soll oder nicht. Falls ein Speicherbereich nicht synchronisiert werden soll, wird das zugehörige Bit im Dirty Page Tag RAM DPTR₀ von der Kopiereinrichtung K₀ ignoriert. Dies ist für Speicherbereiche sinnvoll, von denen bekannt ist, daß sie häufig modifiziert werden, jedoch keine wesentlichen bzw. erforderlichen Informationen enthalten.

Die Erfindung ist nicht auf das Ausführungsbeispiel beschränkt. Beispielsweise kann das Verfahren ebenfalls eingesetzt werden, um einen Speicher MEM₁ einer inaktiven Steuerungseinrichtung SE₁ fortlaufend um in einem Speicher MEM₀ einer aktiven Steuerungseinrichtung SE₀ vorgenommene Änderungen zu ergänzen, mit dem Ziel, daß bei Ausfall der aktiven Steuerungseinrichtung SE₀ der Betrieb durch die inaktive Steuerungseinrichtung SE₁ mit den jeweils aktuellen Speicherinhalten fortgesetzt werden kann.

Dazu wird das vorstehend beschriebene Verfahren dahingehend abgewandelt, daß die Prüfung des Dirty Page Tag RAM DPTR₀ der aktiven Steuerungseinrichtung SE₀ fortlaufend erfolgt und das Unterbrechen der Verarbeitungseinheit CPU₀ beim Unterschreiten eines bestimmten Wertes für den Zähler für die Anzahl der noch nicht kopierten bzw. modifizierten Speicherbereiche nicht erfolgt.

Auch hier kann das Dirty Page Tag RAM DPTR₀ der aktiven Steuerungseinrichtung SE₀ zu jedem Speicherbereich vorteilhaft ein weiteres Bit enthalten, das gesetzt wird, um der Kopiereinrichtung K₀ der aktiven Steuerungseinrichtung SE₀ anzuzeigen, ob dieser Speicherbereich synchronisiert werden soll oder nicht - nicht dargestellt.

Vorteilhaft kann zwischen zwei vollständigen Prüfungen des Dirty Page Tag RAM DPTR₀ der aktiven Steuerungseinrichtung SE₀ eine Unterbrechung vorgesehen werden, beispielsweise um eine zu hohe Belastung der Speicherschnittstelle SI₀, SI₁ durch die Kopiereinrichtung K₀ der aktiven Steuerungseinrichtung SE₀ zu verhindern.

## Patentansprüche

1. Verfahren zum Herstellen konsistenter Speicherinhalte in einem redundanten System bestehend aus einer aktiven Steuerungseinheit (SE₀) und einer identischen inaktiven Steuerungseinheit (SE₁) mit je einer Verarbeitungseinheit (CPU₀, CPU₁) mit integrierter oder separater Schnittstelleneinheit (NB₀, NB₁) und je einem Speicher (MEM₀, MEM₁),
- demgemäß der Speicher (MEM₀) der aktiven Steuerungseinheit (SE₀) durch ein Speicherüberwachungsmodul (S₀) der aktiven Steuerungseinheit (SE₀) überwacht wird,
- demgemäß Adreßinformationen (AI₀) von Speicherbereichen, auf die ein schreibender Zugriff ausgeführt wurde, durch das Speicherüberwachungsmodul (S₀) der aktiven Steuerungseinheit (SE₀) an eine Kopiereinrichtung (K₀) der aktiven Steuerungseinheit (SE₀) weiterleitet werden,
- demgemäß vom Speicherüberwachungsmodul (S₀) der aktiven Steuerungseinheit (SE₀) gelieferte Adreßinformationen (AI₀) durch die Kopiereinrichtung (K₀) der aktiven Steuerungseinheit (SE₀) mit einem Markierspeicher (DPTR₀) der aktiven Steuerungseinheit (SE₀), in welchem alle Speicherbereiche vermerkt werden, auf die ein schreibender Zugriff ausgeführt wurde, abgeglichen werden,
- demgemäß die Daten aus den im Markierspeicher (DPTR₀) der aktiven Steuerungseinheit (SE₀) vermerkten Speicherbereichen durch die Kopiereinrichtung (K₀) der aktiven Steuerungseinheit (SE₀) über eine Verbindung (L) an die Kopiereinrichtung (K₁) der inaktiven Steuerungseinheit (SE₁) gesendet werden, wobei die entsprechenden Stellen im Markierspeicher (DPTR₀) der aktiven Steuerungseinheit (SE₀) zurückgesetzt werden,
- demgemäß die über die Verbindung (L) durch die Kopiereinrichtung (K₁) der inaktiven Steuerungseinheit (SE₁) empfangenen Daten im Speicher (MEM₁) der inaktiven Steuerungseinheit an genau der Adresse abgelegt werden, an der sie auch im Speicher (MEM₀) der aktiven Steuerungseinrichtung (SE₀) hinterlegt sind.

2. Verfahren nach Anspruch 1,
**dadurch gekennzeichnet,**
**daß** im Markierspeicher (DPTR₀) der aktiven Steuerungseinheit (SE₀) pro Speicherbereich ein oder mehrere Bits zur Markierung des jeweiligen Speicherbereichs als durch einen schreibenden Zugriff modifiziert verwendet wird.

3. Verfahren nach Anspruch 2,
**dadurch gekennzeichnet,**
**daß** im Markierspeicher (DPTR₀) der aktiven Steuerungseinheit (SE₀) pro Speicherbereich mindestens ein zusätzliches Bit zur Markierung des jeweiligen Speicherbereichs als bei der Übertragung an den Speicher (MEM₁) der inaktiven Steuerungseinrichtung (SE₁) auszulassen verwendet wird.

4. Verfahren nach einem der Ansprüche 1 bis 3,
**dadurch gekennzeichnet,**
**daß** das Verfahren ausgeführt wird, bis alle durch einen schreibenden Zugriff modifizierten Speicherbereiche des Speichers (MEM₀) der aktiven Steuerungseinrichtung (SE₀) in den Speicher (MEM₁) der inaktiven Steuerungseinrichtung (SE₁) übertragen wurden.

5. Verfahren nach Anspruch 4,
**dadurch gekennzeichnet,**
- **daß** ein Zähler eingesetzt wird, in dem die Anzahl der verbleibenden durch einen schreibenden Zugriff modifizierten Speicherbereiche des Speichers (MEM₀) der aktiven Steuerungseinrichtung (SE₀) vermerkt ist,
- **daß** ein Grenzwert für diesen Zähler festgelegt wird, bei dessen Unterschreiten weitere schreibende Zugriffe auf den Speicher (MEM₀) der aktiven Steuerungseinrichtung (SE₀) verhindert werden, bis alle verbleibenden durch einen schreibenden Zugriff modifizierten Speicherbereiche des Speichers (MEM₀) der aktiven Steuerungseinrichtung (SE₀) in den Speicher (MEM₁) der inaktiven Steuerungseinrichtung (SE₁) übertragen wurden.

6. Verfahren nach einem der Ansprüche 1 bis 3,
**dadurch gekennzeichnet,**
**daß** das Verfahren periodisch neu ausgeführt wird, wobei zwischen zwei vollständigen Prüfungen des Markierspeichers (DPTR₀) der aktiven Steuerungseinheit (SE₀) und der ggf. erforderlichen Übertragung von Daten in den Speicher (MEM₁) der inaktiven Steuerungseinrichtung (SE₁) eine Unterbrechung vorgesehen werden kann.

7. Verfahren nach einem der Ansprüche 1 bis 6,
**dadurch gekennzeichnet,**
- **daß** für die Kopiereinrichtungen (K₀, K₁) je ein FPGA - field programmable gate array - oder je ein ASIC - application specific integrated circuit - vorgesehen werden,
- **daß** der Anschluß der Kopiereinrichtungen (K₀, K₁) an die die Speicherschnittstelle (SI₀, SI₁) enthaltende Schnittstelleneinheit (NB₀, NB₁) bzw. an die Verarbeitungseinheit (CPU₀, CPU₁) mit integrierter Schnittstelleneinheit (NB₀, NB₁) mittels des PCI Bussystems oder mittels des AGP Bussystems ausgeführt wird.

8. Anordnung zum Herstellen konsistenter Speicherinhalte in einem redundanten System bestehend aus einer aktiven Steuerungseinheit (SE₀) und einer identischen inaktiven Steuerungseinheit (SE₁)
- mit je einer Verarbeitungseinheit (CPU₀, CPU₁) mit integrierter oder separater Schnittstelleneinheit (NB₀, NB₁) und je einem Speicher (MEM₀, MEM₁),
- mit einem Speicherüberwachungsmodul (S₀) zur Überwachung des Speichers (MEM₀) der aktiven Steuerungseinheit (SE₀), welches Adreßinformationen (AI₀) an eine Kopiereinrichtung (K₀) der aktiven Steuerungseinheit (SE₀) weiterleitet,
- mit der Kopiereinrichtung (K₀) der aktiven Steuerungseinheit (SE₀), welche die Adreßinformationen (AI₀) mit in einem Markierspeicher (DPTR₀) der aktiven Steuerungseinheit (SE₀), in welchem alle Speicherbereiche vermerkt werden, auf die ein schreibender Zugriff ausgeführt wurde, abgleicht, und mittels des Markierspeicher (DPTR₀) der aktiven Steuerungseinheit (SE₀) markierten Speicherbereiche des Speichers (MEM₀) der aktiven Steuerungseinheit (SE₀) an eine Kopiereinrichtung (K₁) der inaktiven Steuerungseinheit (SE₁) überträgt und die entsprechenden Stellen im Markierspeicher (DPTR₀) nach Übertragung zurücksetzt,
- mit der Kopiereinrichtung (K₁) der inaktiven Steuerungseinheit (SE₁), welche Daten von der Kopiereinrichtung (K₀) der aktiven Steuerungseinheit (SE₀) über eine Verbindung (L) empfängt und in den Speicher (MEM₁) der inaktiven Steuerungseinheit (SE₁) an genau der Adresse einträgt, an der sie auch im Speicher (MEM₀) der aktiven Steuerungseinrichtung (SE₀) hinterlegt sind.

9. Speicherüberwachungsmodul (S₀, S₁) mit Mitteln zur Überwachung der Speicherschnittstelle (SI₀, SI₁) eines Speichers (MEM₀, MEM₁) und Mitteln zur Bereitstellung von Adreßinformationen (AI₀, AI₁) über Speicherbereiche, auf die ein schreibender Zugriff ausgeführt wurde.

10. Kopiereinrichtung (K₀, K₁) eines redundanten Systems
- mit Mitteln zum Lesen von Daten aus einem Speicher (MEM₀, MEM₁) einer Steuerungseinrichtung (SE₀, SE₁),
- mit Mitteln zum Schreiben von Daten in den Speicher (MEM₀, MEM₁) der Steuerungseinrichtung (SE₀, SE₁)
- mit Mitteln zum Empfang von Adreßinformationen (AI₀, AI₁) über Speicherbereiche, auf die ein schreibender Zugriff ausgeführt wurde,
- mit Mitteln zum Abgleich der Adreßinformationen (AI₀, AI₁) mit einem Markierspeicher (DPTR₀, DPTR₁), in welchem alle Speicherbereiche vermerkt werden, auf die ein schreibender Zugriff ausgeführt wurde,
- mit Mitteln zum Senden von Daten aus den im Markierspeicher (DPTR₀, DPTR₁) vermerkten Speicherbereichen des Speichers (MEM₀, MEM₁) und deren Adreßinformationen an eine zweite Kopiereinrichtung (K₀, K₁),
- mit Mitteln zum Empfang von Daten und deren Adreßinformationen von einer ersten Kopiereinrichtung (K₀, K₁) und Mitteln zum Eintragen der Daten in den Speicher (MEM₀, MEM₁) der Steuerungseinrichtung (SE₀, SE₁) entsprechend der empfangenen Adreßinformationen.

11. Kopiereinrichtung (K₀, K₁) nach Anspruch 10,
**dadurch gekennzeichnet,**
- **daß** die Kopiereinrichtung (K₀, K₁) ein FPGA - field programmable gate array - oder ein ASIC - application specific integrated circuit - ist,
- **daß** die Kopiereinrichtung (K₀, K₁) mittels des PCI Bussystems oder mittels des AGP Bussystems an die die Speicherschnittstelle (SI₀, SI₁) enthaltende Schnittstelleneinheit (NB₀, NB₁) bzw. an die Verarbeitungseinheit (CPU₀, CPU₁) mit integrierter Schnittstelleneinheit (NB₀, NB₁) angeschlossen ist.

12. Kopiereinrichtung (K₀, K₁) nach einem der Ansprüche 10 oder 11,
**dadurch gekennzeichnet,**
**daß** die Kopiereinrichtung (K₀, K₁) zusätzlich ein Speicherüberwachungsmodul (S₀, S₁) mit Mitteln zur Überwachung der Speicherschnittstelle (SI₀, SI₁) des Speichers (MEM₀, MEM₁) und Mitteln zur Bereitstellung von Adreßinformationen (AI₀, AI₁) über Speicherbereiche, auf die ein schreibender Zugriff ausgeführt wurde und den Markierspeicher (DPTR₀, DPTR₁), in welchem alle Speicherbereiche vermerkt werden, auf die ein schreibender Zugriff ausgeführt wurde, enthält.
